# EUROPÄISCHE PATENTSCHRIFT

(11) **EP 2 028 387 B1**
(45) Veröffentlichungstag und Bekanntmachung des Hinweises auf die Patenterteilung: **01.02.2012**
(21) Anmeldenummer: 08014755.6
(22) Anmeldetag: 20.08.2008
(51) Int. Cl.: F16D 65/12

(54) **Bremsscheiben/Nabenverbindung**
Brake discs/collar connection
Raccordement moyeu/disque de frein

(30) Priorität: 24.08.2007 DE 102007040143
(43) Veröffentlichungstag der Anmeldung: 25.02.2009
(73) Patentinhaber: KNORR-BREMSE Systeme für Nutzfahrzeuge GmbH, 80809 München (DE)
(72) Erfinder: Springer, Mario, 94535 Eging am See (DE)
(74) Vertreter: Mattusch, Gundula

(56) Entgegenhaltungen:
- EP-A- 0 887 571
- WO-A-01/36836
- WO-A-02/38979
- DE-A1- 10 305 236

## Beschreibung

Die Erfindung betrifft eine Bremsscheiben/Nabenverbindung nach dem Oberbegriff des Anspruchs 1.

Zur Anbindung einer Bremsscheibe an einer Nabe sowie zur Übertragung eines beim Bremsen entstehenden Bremsmoments auf die Nabe und damit auf ein angeschlossenes Fahrzeugrad, sind ineinander greifende zahnförmige Formschlussmittel bekannt, die aus am Innenumfang der Bremsscheibe vorgesehenen Stützelementen und damit im Sinne einer Verdrehsicherung korrespondierenden, am Außenumfang der Nabe angeordneten Mitnehmern bestehen.

Derartige Bremsscheiben/Nabenverbindungen sind z.B. aus der DE 197 26 674 A1 und der DE 195 44 559 C1 bekannt.

Zur Verbindung der Bremsscheibe mit der Nabe sind dabei Zwischenelemente zur Drehmoment- und Kraftübertragung von den Mitnehmern der Nabe auf die Stützelemente der Bremsscheibe vorgesehen, wobei einerseits die Mitnehmer in die Zwischenelemente und andererseits die Zwischenelemente in die Stützelemente eingreifen, so dass in beiden Drehrichtungen eine Drehmomentübertragung von der Bremsscheibe auf die Nabe gewährleistet ist.

Diese Zwischenelemente ermöglichen eine Demontage der Bremsscheibe, beispielsweise zu deren Wechsel, wozu die Zwischenelemente ausgetrieben werden, so dass die Bremsscheibe abnehmbar ist.

Durch die stoffliche Trennung der Bremsscheibe von der Nabe werden Rissbildungen in der Bremsscheibe weitgehend verhindert, die ansonsten durch die beim Bremsen sich entwickelnde Reibungswärme entstehen können. Die gegenüber der Nabe als separates Bauteil vorliegende Bremsscheibe hat somit die Möglichkeit, sich unter Wärmeeinfluss radial auszudehnen.

Um fertigungsbedingte Toleranzen auszugleichen, die bei einer Drehmomentenübertragung zu einer ungleichmäßigen Belastung der Stützelemente und/oder der Mitnehmer führen, ist es bekannt, die Zwischenelemente mit zwei in sehr spitzem Winkel zueinander verlaufenden Schenkeln zu versehen, die relativ zueinander bewegbar sind, so dass beim Eintreiben der Zwischenelemente die vorhandenen Toleranzen ausgeglichen werden.

Allerdings kann aufgrund der Elastizität der Zwischenelemente eine Beeinträchtigung der Drehmomentenübertragung gegeben sein, da die Zwischenelemente dabei in gewissem Maße zusammengedrückt werden.

Daneben unterliegen die Zwischenelemente betriebsbedingt einem häufigen Lastwechsel, entsprechend der Anzahl der Bremsungen, was unter Umständen zu einem Dauerbruch des einen oder anderen Zwischenelementes führen kann.

Naturgemäß wird dadurch die Betriebssicherheit der Bremsscheiben/Nabenverbindung, zumindest jedoch deren Standzeit herabgesetzt.

In der EP 0 887 571 A2, siehe Oberbegriff des Anspruchs 1, ist eine Bremsscheiben/Nabenverbindung geoffenbart, bei der die Nabe ebenso wie die Bremsscheibe Befestigungsringe aufweisen, durch die Befestigungsschrauben gerührt sind. Im Durchführbereich der Befestigungsschrauben durch den Befestigungsring der Bremsscheibe ist auf einem zylindrischen Absatz der jeweiligen Befestigungsschraube eine Wellblechhülse gelagert, durch die ein temperaturbedingter radialer Spielausgleich erfolgen soll.

Der Erfindung liegt die Aufgabe zugrunde, eine Bremsscheiben/Nabenverbindung der gattungsgemäßen Art so weiterzuentwickeln, dass mit konstruktiv geringem Aufwand ein Toleranzausgleich zwischen den Stützelementen und den Mitnehmern bei gleichzeitig verbesserter Standzeit und Erhöhung der Betriebssicherheit möglich ist.

Diese Aufgabe wird durch eine Bremsscheiben/Nabenverbindung mit den Merkmalen des Anspruchs 1 gelöst.

Eine im Sinne der Erfindung ausgebildete Bremsscheiben/Nabenverbindung bringt eine ganze Reihe von Vorteilen gegenüber denen nach dem Stand der Technik mit sich.

So ist hervorzuheben, dass die Bremsscheibe gegenüber der Nabe nun in Drehrichtung fest eingespannt ist, d.h., fertigungsbedingte Toleranzen kommen nicht mehr zur Wirkung, auch nicht durch eine sozusagen Mikroverdrehung.

Dadurch werden sowohl die Mitnehmer wie auch die Stützelemente in ihrer Gesamtheit gleichmäßig belastet, mit der Folge einer Verbesserung der Standzeit und, in diesem Zusammenhang zumindest genauso wichtig, einer Verbesserung der Betriebssicherheit. Vor allem deshalb, weil keines der Stützelemente oder keiner der Mitnehmer stärker belastet wird als die anderen.

Nach der Erfindung ist vorgesehen, die Hülse radial und axial verformbar zu gestalten, wodurch sich eine radiale Ausdehnungsmöglichkeit ergibt, die zu einer spielfreien Anlage der Hülse an dem oder den zugeordneten Stützelementen führt.

Der erfindungsgemäß als Bolzen, vorzugsweise Schraubbolzen ausgebildete jeweilige Mitnehmer, ist zweckmäßigerweise in die Nabe eingeschraubt, wobei die Bolzen parallel zur Mittelachse der Bremsscheibe verlaufen.

Das Zwischenelement ist axial und damit radial durch Verdrehen des Schraubbolzens oder einer darauf aufgeschraubten Mutter verformbar.

Nach einer weiteren Ausführungsvariante ist vorgesehen, den Bolzen durch das Stützelement zu führen, ebenso wie die das Zwischenelement bildende Hülse. Dazu weist das Stützelement im Durchführbereich ein radial ausgerichtetes Langloch auf, so dass die Buchse nur an der Wandung des Langloches in Umfangsrichtung der Bremsscheibe anliegt. Hierdurch ist eine radiale Ausdehnung der Bremsscheibe möglich, wie sie beim Bremsen durch die entstehende Reibungswärme gegeben sein kann.

Eine thermisch bedingte Ausdehnung der Bremsscheibe in axialer Richtung kann durch ein Federelement ausgeglichen werden, das sich einerseits am Stützelement und andererseits an der Nabe bzw. daran angeschlossener Teile abstützt.

Weitere vorteilhafte Ausbildungen der Erfindungen sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Bremsscheiben/Nabenverbindung in einer perspektivischen Ansicht
- Figur 2: einen Teilausschnitt durch die Bremsscheiben/Nabenverbindung in einer Seitenansicht
- Figur 3: einen vergrößerten Teilausschnitt durch die Bremsschei- ben/Nabenverbindung, gemäß der Linie III-III in Figur 2
- Figur 4: ein weiteres Ausführungsbeispiel der Erfindung in einer perspek- tivischen Ansicht
- Figur 5: einen Teilausschnitt durch die Bremsscheiben/Nabenverbindung nach Figur 4 in einer geschnittenen Seitenansicht
- Figur 6: einen vergrößerten Teilausschnitt des Beispiels nach den Figuren 4 und 5 in einer Vorderansicht.

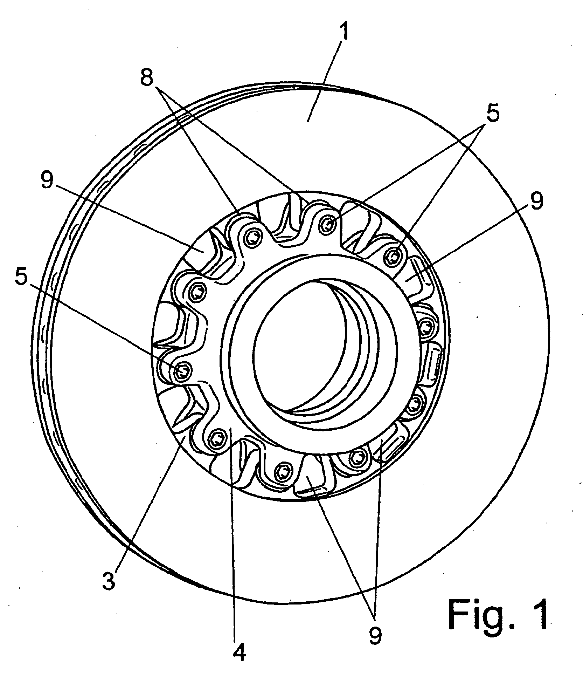

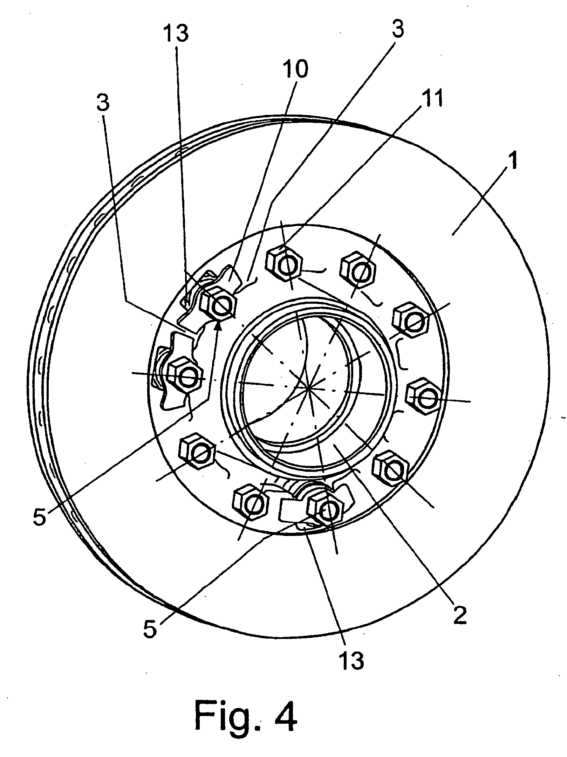

In den Figuren 1 und 4 ist jeweils eine an einem hohlzylindrischen Abschnitt einer Nabe 2 mittels einer Bremsscheiben/Nabenverbindung festgelegte, innen belüftete Bremsscheibe 1 erkennbar, die an ihrem Innenumfang gleichmäßig verteilte, im Sinne von Zähnen radial sich erstreckenden Stützelemente 3 aufweist, die mit am Außenumfang der Nabe 2 vorgesehenen Mitnehmern zur Verdrehsicherung korrespondieren. Dabei ist zwischen jedem Stützelement 3 und dem zugeordneten Mitnehmer ein Zwischenelement angeordnet.

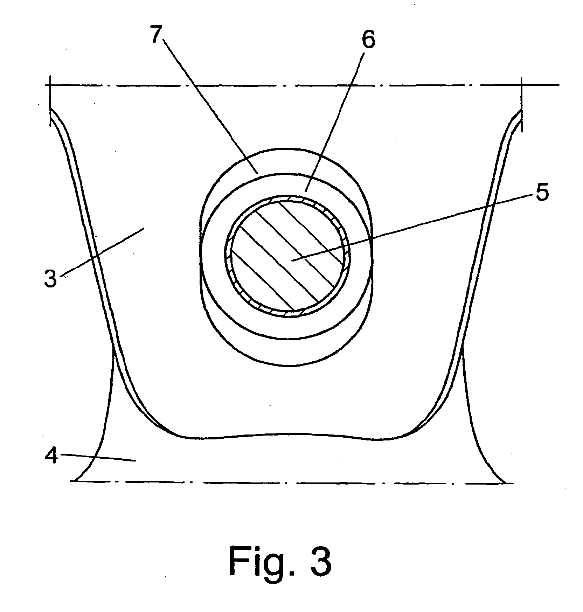

Erfindungsgemäß ist jeder Mitnehmer als ein parallel zur Mittelachse der Bremsscheibe 1 sich erstreckender Bolzen 5 ausgebildet, der in den gezeigten Ausführungsbeispielen in ein Auge 4 der Nabe 2 eingeschraubt ist, während das Zwischenelement aus einer auf dem Bolzen 5 gelagerten Hülse bzw. Buchse 6 besteht. Bei dem in den Figuren 1 bis 3 gezeigten Beispiel ist jedes Stützelement 3 zwischen zwei parallel und abständig zueinander angeordneten Augen 4 der Nabe 2 gelagert, wobei der Bolzen 5 sowohl die beiden Augen 4 wie auch das Stützelement 3 durchtritt. Durch diese Anordnung sind zwischen den Stützelementen 3 und den Augen 4 Fenster 9 geschaffen, die zu einer sehr effektiven Lüftung der Bremsscheibe 1 beitragen.

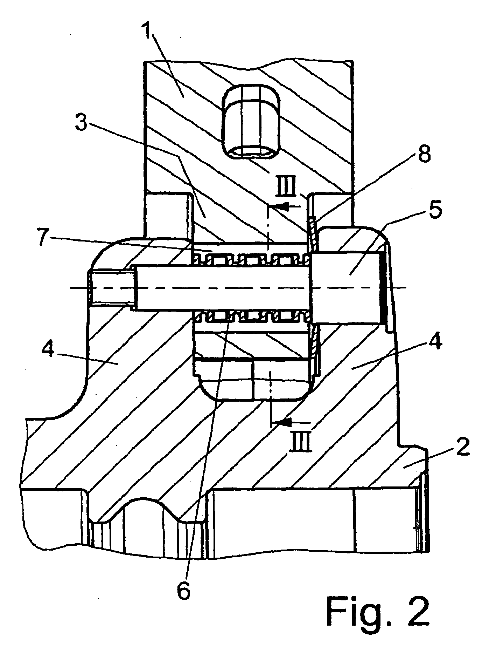

Wie insbesondere die Figur 2 sehr deutlich zeigt, weist die Buchse 6 einen mäandrierenden Wandungsverlauf auf, durch den eine gewisse Verformbarkeit sowohl in axialer wie auch in radialer Richtung möglich ist. Derartige Buchsen sind an sich bekannt, werden aber nicht wie hier offenbart eingesetzt.

Durch Festziehen des als Schraube ausgebildeten Bolzens 5 wird die Buchse 6 in axialer Richtung sozusagen gestaucht unter gleichzeitiger radialer Verformung, wobei sich die Buchse 6 einerseits an einem der sich gegenüberliegenden Augen 4 und andererseits am Kopf des Bolzens 5 abstützt.

Durch die radiale Verformung wird die Buchse 6 mit ihrer Außenseite gegen die Wandung eines im Stützelement 3 vorgesehenen, sich radial erstreckenden Langlochs 7 gepresst, so dass sie in Umfangsrichtung der Bremsscheibe 1 spielfrei am Stützelement bzw. der Wandung des Langloches 7 anliegt.

In radialer Richtung weist das Langloch 7 gegenüber der Buchse 6 so viel Platz auf, dass eine thermisch bedingte radiale Ausdehnung der Bremsscheibe 1 problemlos möglich ist.

Um auch eine axiale thermische Ausdehnung der Bremsscheibe 1 zu ermöglichen, ist auf der dem Kopf des Bolzens 5 zugewandten Seite eine Tellerfeder 8 vorgesehen, die sich einerseits an der zugeordneten Außenseite des Stützelementes 3 und andererseits an der dieser zugewandten Innenseite des Auges 4 abstützt.

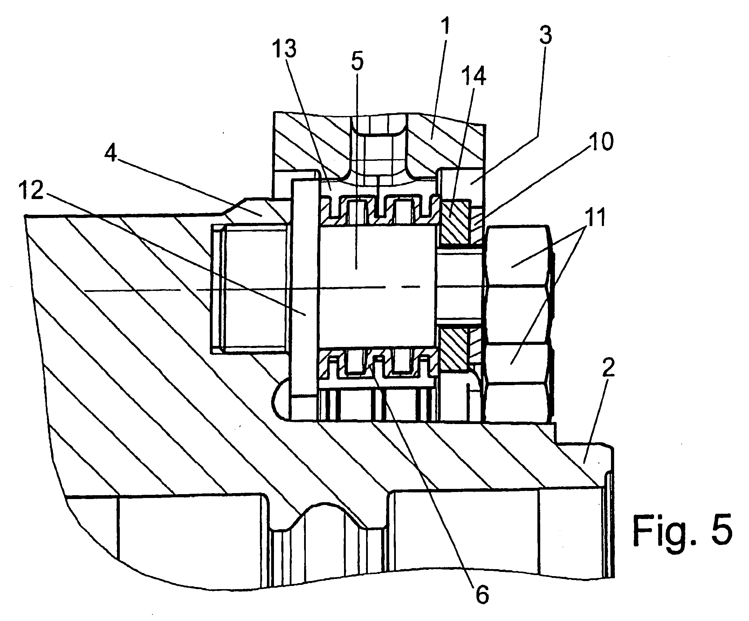

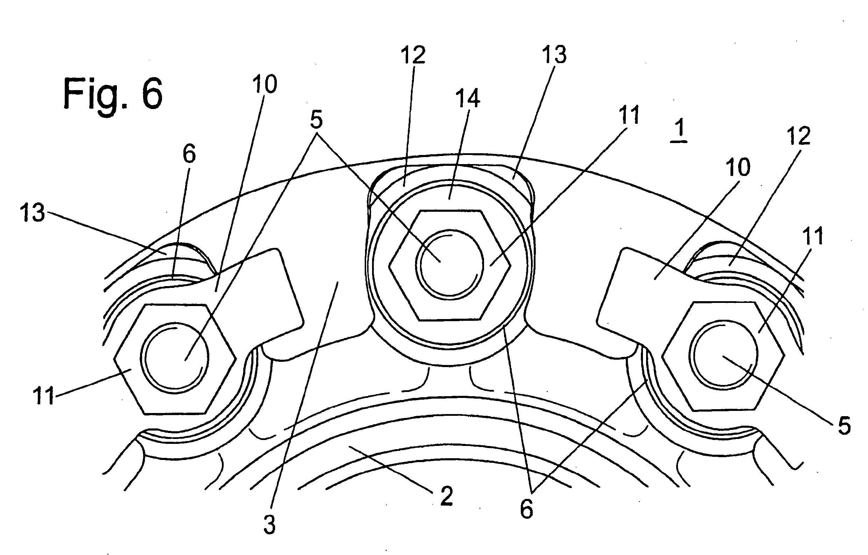

Bei dem in den Figuren 4 bis 6 gezeigten Ausführungsbeispiel der Erfindung sind die Bolzen 5 und die darauf geführten Buchsen 6 zwischen den Stützelementen 3 angeordnet, sozusagen in den gebildeten Zahnlücken.

Dabei ist jeder Bolzen 5 ebenfalls in ein Auge 4 der Nabe 2 eingeschraubt oder stattdessen in einen umlaufenden Flansch, der mit einer entsprechenden Anzahl Gewindebohrungen versehen ist.

An den in das Auge 4 eingedrehten Gewindeabschnitt des Bolzens 5 schließt sich ein Bündchen 12 an, das eine Stützfläche für die Buchse 6 bildet, deren Wandung ebenfalls, entsprechend dem zuvor beschriebenen Ausführungsbeispiel, mäanderförmig verläuft.

An dem dem Auge 4 abgewandten Ende ist der Bolzen 5 ebenfalls mit einem Gewindeschaft versehen, auf den eine Mutter 11 aufgedreht ist. Über eine Scheibe 14, die an der dem Bündchen 12 abgewandten Stirnseite der Buchse 6 anliegt, wird diese beim Festziehen der Mutter 11 verformt und in Drehrichtung bzw. Umfangsrichtung der Bremsscheibe 1 an die Wandung des zwischen zwei Stützelementen 3 gebildeten Zwischenraumes angepresst.

Der Zwischenraum 13 ist in seiner radialen Erstreckung größer als in seiner Erstreckung quer dazu, so dass zwischen der oberen Begrenzung des Zwischenraumes 13 und der Buchse 6 ausreichend Spiel ist für eine radiale thermisch bedingte Ausdehnung der Bremsscheibe 1.

Eine axiale Ausdehnung der Bremsscheibe 1 ist gleichfalls problemlos möglich, da auf dem der Mutter 11 zugeordneten Gewindeschaft eine Blattfeder 10 gelagert ist, die beidseitig sich erstreckende Flügel aufweist, von denen jeder an einem Stützelement 3 anliegt. Die Blattfeder 10 ist im übrigen zwischen der Scheibe 14 und der Mutter 11 eingeklemmt.

Während die Bremsscheibe 1 durch Anlage an dem Bündchen 12 in Richtung der Augen 4 gesichert ist, erfolgt diese axiale Sicherung in entgegengesetzter Richtung, also in Richtung der Mutter 11 durch die Blattfedern 10.

### Bezugszeichenliste

- 1: Bremsscheibe
- 2: Nabe
- 3: Stützelement
- 4: Auge
- 5: Bolzen
- 6: Buchse
- 7: Langloch
- 8: Tellerfeder
- 9: Fenster
- 10: Blattfeder
- 11: Mutter
- 12: Bündchen
- 13: Zwischenraum
- 14: Scheibe

## Patentansprüche

1. Bremsscheiben/Nabenverbindung zur Verbindung einer Bremsscheibe (1) mit einer Nabe (2), wobei die Bremsscheibe (1) an ihrem inneren Umfang eine Vielzahl gleichmäßig verteilter Stützelemente (3) aufweist, die zur Verdrehsicherung mit am Außenumfang der Nabe (2) vorgesehenen Mitnehmem korrespondieren, wobei zwischen jedem Stützelement (3) und dem zugeordneten Mitnehmer ein drehmoment- und kraftübertragendes Zwischenelement angeordnet ist, **dadurch gekennzeichnet, dass** jeder Mitnehmer als ein parallel zur Mittelachse der Bremsscheibe (1) sich erstreckender Bolzen (5) ausgebildet ist, der fest mit der Nabe (2) verbunden ist, und dass das Zwischenelement aus einer auf dem Bolzen (5) gelagerten axial und radial verformbaren Buchse (6) besteht, die in Umfangsrichtung der Bremsscheibe (1) spielfrei am jeweiligen Stützelement (3) anliegt.

2. Bremsscheibe nach Anspruch 1, **dadurch gekennzeichnet, dass** die Wandung der Buchse (6) mäandrierend verläuft.

3. Bremsscheibe nach einem der vorhergehenden Ansprüche, **dadurch gekennzeichnet, dass** der Bolzen (5) mit der Nabe (2) verschraubt ist.

4. Bremsscheibe nach Anspruch 1 oder 2, **dadurch gekennzeichnet, dass** die Buchse (6) in radialer Richtung mit Spiel zur Bremsscheibe (1) bzw. dem zugeordneten Stützelement (3) angeordnet ist.

5. Bremsscheiben/Nabenverbindung nach einem der vorhergehenden Ansprüche, **dadurch gekennzeichnet, dass** jedes Stützelement (3) zwischen zwei abständig zueinander angeordneten, sich radial erstreckenden Augen (4) der Nabe (2) platziert ist.

6. Bremsscheiben/Nabenverbindung nach einem der vorhergehenden Ansprüche, **dadurch gekennzeichnet, dass** das Stützelement (3) ein sich radial erstreckendes Langloch (7) aufweist, an dessen Wandung die Buchse (6) in Drehrichtung der Bremsscheibe (1) anliegt.

7. Bremsscheiben/Nabenverbindung nach einem der vorhergehenden Ansprüche, **dadurch gekennzeichnet, dass** der Bolzen (5) als Schraube ausgebildet ist, wobei die Buchse (6) sich einerseits an einer Innenseite eines Auges (4) und mit ihrer anderen Seite an einem Kopf des Bolzens (5) abstützt.

8. Bremsscheiben/Nabenverbindung nach einem der vorhergehenden Ansprüche, **dadurch gekennzeichnet, dass** die Bremsscheibe (1) in axialer Richtung federbelastet an der Nabe (2) gehalten ist.

9. Bremsscheiben/Nabenverbindung nach einem der vorhergehenden Ansprüche, **dadurch gekennzeichnet, dass** auf dem Bolzen (5) eine Tellerfeder (8) geführt ist, die sich einerseits am Stützelement (3) und andererseits an der zugewandten Innenseite des Auges (4) der Nabe (2) abstützt.

10. Bremsscheiben/Nabenverbindung nach einem der vorhergehenden Ansprüche, **dadurch gekennzeichnet, dass** die Bolzen (5) in einen umfänglichen Flansch der Nabe (2) eingeschraubt sind.

11. Bremsscheiben/Nabenverbindung nach einem der vorhergehenden Ansprüche, **dadurch gekennzeichnet, dass** der Bolzen (5) und die darauf gelagerte Buchse (6) in einem zwischen zwei Stützelement (3) gebildeten Zwischenraum (13) geführt sind, an dessen in Umfangsrichtung sich gegenüberliegenden Wandungen die Buchse (6) anliegt.

12. Bremsscheiben/Nabenverbindung nach einem der vorhergehenden Ansprüche, **dadurch gekennzeichnet, dass** der Bolzen (5) ein Bündchen (12) aufweist, an dem die Buchse (6) mit einer Stirnseite anliegt.

13. Bremsscheiben/Nabenverbindung nach einem der vorhergehenden Ansprüche, **dadurch gekennzeichnet, dass** die Buchse (6) mittels einer auf den Bolzen (5) aufgedrehten Mutter (11) verspannbar ist.

14. Bremsscheiben/Nabenverbindung nach einem der vorhergehenden Ansprüche, **dadurch gekennzeichnet, dass** zwischen der Mutter (11) und der Buchse (6) eine Scheibe (14) vorgesehen ist, an der die Buchse (6) mit ihrer dem Bündchen (12) abgewandten Stirnseite anliegt.

15. Bremsscheiben/Nabenverbindung nach einem der vorhergehenden Ansprüche, **dadurch gekennzeichnet, dass** auf den Bolzen (5) eine Blattfeder (10) geführt ist, die in Umfangsrichtung der Bremsscheibe (1) sich beidseitig erstreckende Flügel aufweist, von denen jeder an einem Stützelement (3) anliegt.

16. Bremsscheiben/Nabenverbindung nach einem der vorhergehenden Ansprüche, **dadurch gekennzeichnet, dass** die Blattfeder (10) zwischen der Scheibe (14) und der Mutter (11) angeordnet ist.

## Claims

1. Brake disc / hub connection for connecting a brake disc (1) to a hub (2), wherein the brake disc (1) comprises on its inner periphery a plurality of evenly distributed support elements (3) which correspond for the purpose of anti-twist protection to entrainer elements provided on the outer periphery of the hub (2), wherein a torque and force transferring intermediate element is arranged between each support element (3) and the assigned entrainer element, **characterised in that** each entrainer element is formed as a pin (5) extending parallel to the central axis of the brake disc (1), which pin (5) is fixedly connected to the hub (2), and the intermediate element consists of a radially deformable bushing (6) which is axially mounted on the pin (5) and lies in the peripheral direction of the brake disc (1) free of play against the respective support element (3).

2. Brake disc according to claim 1, **characterised in that** the wall of the bushing (6) extends in a meandering way.

3. Brake disc according to one of the preceding claims, **characterised in that** the pin (5) is screwed to the hub (2).

4. Brake disc according to claim 1 or 2, **characterised in that** the bushing (6) is arranged in radial direction with play relative to the brake disc (1) or the assigned support element (3).

5. Brake disc / hub connection according to one of the preceding claims, **characterised in that** each support element (3) is placed between two eyes (4) of the hub (2) extending radially and arranged at a distance from each other.

6. Brake disc / hub connection according to one of the preceding claims, **characterised in that** the support element (3) comprises a radially extending elongated hole (7), on the wall of which the bushing (6) lies in the rotation direction of the brake disc (1).

7. Brake disc / hub connection according to one of the preceding claims, **characterised in that** the pin (5) is formed as a screw, wherein the bushing (6) is supported on one side on an inner side of the eye (4) and with its other side on a head of the pin (5).

8. Brake disc / hub connection according to one of the preceding claims, **characterised in that** the brake disc (2) is held in axial direction spring loaded on the hub (2).

9. Brake disc / hub connection according to one of the preceding claims, **characterised in that** a plate spring (8) is guided on the pin (5), which plate spring (8) is supported on one side on the support element (3) and on the other side on the facing inner side of the eye (4) of the hub (2).

10. Brake disc / hub connection according to one of the preceding claims, **characterised in that** the pin (5) is screwed into a peripheral flange of the hub (2).

11. Brake disc / hub connection according to one of the preceding claims, **characterised in that** the pin (5) and the bushing (6) mounted thereon are guided in an intermediate space (13) formed between two support elements (3), on the walls of which intermediate space (13) lying opposite each other in the peripheral direction the bushing (6) lies.

12. Brake disc / hub connection according to one of the preceding claims, **characterised in that** the pin (5) comprises a small collar (12), against which the bushing (6) lies with an end face.

13. Brake disc / hub connection according to one of the preceding claims, **characterised in that** the bushing (6) can be tensioned by means of a nut (11) screwed onto the pin (5).

14. Brake disc / hub connection according to one of the preceding claims, **characterised in that** a disc (14) is provided between the nut (11) and the bushing (6), against which the bushing (6) lies with its end face facing away from the small collar (12).

15. Brake disc / hub connection according to one of the preceding claims, **characterised in that** a leaf spring (10) is guided on the pin (5), which leaf spring (1) comprises wings extending on both sides in the peripheral direction of the brake disc (1), of which each wing lies against a support element (3).

16. Brake disc / hub connection according to one of the preceding claims, **characterised in that** the leaf spring (10) is arranged between the disc (14) and the nut (11).

## Revendications

1. Raccordement disque de frein/moyeu à raccorder un disque de frein (1) à un moyeu (2), dans lequel ledit disque de frein (1) comprend une pluralité des éléments d'appui (3) en distribution homogène à sa périphérie intérieure, qi correspondent à des éléments entraîneurs disposés à la périphérie extérieure du moyeu (2) pour le blocage de contournement, dans lequel un élément intermédiaire de transmission d'un moment de couple et de force est disposé entre chaque élément d'appui (3) et l'élément entraîneur y affecté, **caractérisé en ce que** chaque élément entraîneur est configuré sous forme d'un boulon (5) s'étendant en parallèle à l'axe centrale dudit disque de frein (1), qui est solidaire dudit moyeu (2), et **en ce que** ledit élément intermédiaire est composé d'une douille (6) appuyée sur ledit boulon et déformable en sens axial et radial, qui porte contre l'élément d'appui (3) respectif sans jeu en sens périphérique dudit disque de frein (1).

2. Disque de frein selon la revendication 1, **caractérisé en ce que** la paroi de ladite douille (6) s'étend en méandres.

3. Disque de frein selon une quelconque des revendications précédentes, **caractérisé en ce que** ledit boulon (5) est vissé audit moyeu (2).

4. Disque de frein selon la revendication 1 ou 2, **caractérisé en ce que** ladite douille (6) est disposé avec un jeu en sens radial relativement audit disque de frein (1) ou respectivement audit élément d'appui (3) y affecté.

5. Raccordement disque de frein/moyeu selon une quelconque des revendications précédentes, **caractérisé en ce que** chaque élément d'appui (3) est placé entre deux bosses (4) dudit moyeu (2), qui sont disposées à un écart l'une de l'autre et qui s'étendent en sens radial.

6. Raccordement disque de frein/moyeu selon une quelconque des revendications précédentes, **caractérisé en ce que** ledit élément d'appui (3) comprend un trou allongé (7) s'étendent en sens radial et ayant une paroi, contre laquelle porte ladite douille (6) en sens de rotation dudit disque de frein (1).

7. Raccordement disque de frein/moyeu selon une quelconque des revendications précédentes, **caractérisé en ce que** ledit boulon (5) est configuré sous forme d'une vis, dans lequel ladite douille (6) s'appuie, d'un côté, à une face intérieure d'une bosse (4) et, par son autre côté, à une tête dudit boulon (5).

8. Raccordement disque de frein/moyeu selon une quelconque des revendications précédentes, **caractérisé en ce que** ledit disque de frein (1) est retenu en sens axial et chargé par un ressort.

9. Raccordement disque de frein/moyeu selon une quelconque des revendications précédentes, **caractérisé en ce qu'**une rondelle-ressort (8) est guidée sur ledit boulon, qui s'appuie, d'un côté, audit élément d'appui (3) et, d'autre côte, au côté intérieur en face de ladite bosse (4) dudit moyeu (2).

10. Raccordement disque de frein/moyeu selon une quelconque des revendications précédentes, **caractérisé en ce que** lesdits boulons (5) sont vissés dans une flasque périphérique dudit moyeu (2).

11. Raccordement disque de frein/moyeu selon une quelconque des revendications précédentes, **caractérisé en ce que** ledit boulon (5) et ladite douille (6) y logée sont guidés dans un espacement (13) formé entre deux éléments d'appui (3) et présentant des parois opposées en sens périphérique, contre lesquelles porte ladite douille (6).

12. Raccordement disque de frein/moyeu selon une quelconque des revendications précédentes, **caractérisé en ce que** ledit boulon (5) présente une collerette (12) contre laquelle porte ladite douille (6) par un côté de face.

13. Raccordement disque de frein/moyeu selon une quelconque des revendications précédentes, **caractérisé en ce que** ladite douille (6) est apte à être serrée moyennant un écrou (11) vissé sur ledit boulon (5).

14. Raccordement disque de frein/moyeu selon une quelconque des revendications précédentes, **caractérisé en ce qu'**un disque (14) est disposé entre ledit écrou (11) et ladite douille (6), contre lequel porte ladite douille (6) par son côté de face opposé à ladite collerette (12).

15. Raccordement disque de frein/moyeu selon une quelconque des revendications précédentes, **caractérisé en ce qu'**un ressort à lame (10) est guidé sur lesdits boulons (5), qui comprend des ailes s'étendant des deux côtés en sens périphérique dudit disque de frein (1), dont chacune porte contre un élément d'appui (3).

16. Raccordement disque de frein/moyeu selon une quelconque des revendications précédentes, **caractérisé en ce que** ledit ressort à lame (10) est disposé entre ledit disque (14) et ledit écrou (11).
